# EUROPEAN PATENT APPLICATION

(11) **EP 1 498 464 A1**
(43) Date of publication of application: **19.01.2005**
(21) Application number: 04015943.6
(22) Date of filing: 07.07.2004
(51) Int. Cl.: C09K 7/02, C08L 97/00

(54) **Lignin-solids compositions**

(30) Priority: 15.07.2003 US 487496 P; 14.05.2004 US 846813
(71) Applicant: ExxonMobil Research and Engineering Company, Annandale, New Jersey 08801 (US)
(72) Inventor: Varadaraj, Ramesh, Flemington, New Jersey 08822 (US)
(74) Representative: Troch, Geneviève

(57) **Abstract**

A lignin-solids composition comprising surface modified solids wherein said surface modified solids have adsorbed thereon thermally treated lignin. A method for preparing a lignin-solids composition comprising thermally treating a mixture of lignin and solids in the presence of oxygen for 1 to 3 hours and at a temperature in the range of 140° to 170°C to produce thermally treated lignin and to allow the thermally treated lignin to adsorb onto the surface of the solids.

## Description

### FIELD OF THE INVENTION

The invention is broadly directed to organo-solids compositions having amphiphilic properties and a method for preparing the same.

### BACKGROUND

Organo-solids compositions find uses in many industrial applications. For example organo clays are components of drilling fluids, adhesives, coatings, engineering plastics and performance polymers. Generally organo clays or hydrophobic clays are prepared using cationic surfactants such as alkyl ammonium salts and clay gels. There is a need for novel organo-solids compositions comprising aromatic hydrocarbons. Aromatic hydrocarbon-solids compositions can exhibit unique properties compared to the alkyl ammonium counterparts and broaden the use and scope of organo-solids in industrial applications. The current invention addresses this need.

### SUMMARY OF THE INVENTION

A lignin-solids composition comprising surface modified solids comprising: 99.9 to 80 wt% solids based on the total weight of said composition, and 0.1 to 20 wt% thermally treated lignin, wherein said thermally treated lignin is adsorbed on said solids.

The invention also includes a method for preparing a lignin-solids composition comprising:
- thermally treating a mixture of lignin and solids in the presence of oxygen for 15 minutes to 6 hours and at a temperature in the range of 120° to 220°C to produce thermally treated lignin and to allow the thermally treated lignin to adsorb onto the surface of the solid wherein said adsorption achieves at least 50% coverage to result in a thermally treated lignin-solids product,
- cooling said product to a temperature in the range of about 20°C to about 25°C to provide a cooled product and, thereafter,
- washing said cooled product with an aqueous solution comprising water to provide the lignin-solids composition.

### DETAILED DESCRIPTION OF THE INVENTION

Lignin is a complex oxygen-containing organic compound, a mixture of polymers of complex structure. After cellulose, it is the most abundant organic material on earth, making up a quarter to a third of the dry weight of wood. Ligin is extracted from wood pulp during the manufacture of paper. The extracted lignin can be used to prepare the lignin-solids composition of the instant invention. Chemical reactions can be performed on lignin to provide functionalized lignin. For example, lignin can be sulfonated by methods known in the art of sulfonation to ligninsulfonate. For example, in the commercial sulfite paper process, a liquor byproduct is obtained that comprises wood sugars and lignin sulfonate.

The lignin of the lignin-solids composition of the instant invention is preferably a salt of lignin sulfonic acid. Salt of lignin sulfonic acid is also generally called lignin sulfonate salt. The salts are preferably, salts of Group I and Group II elements of the long form of The Periodic Table of elements. Some nonlimiting examples of salts of lignin sulfonic acid are sodium, potassium, magnesium and calcium lignin sulfonates. Ammonium lignin sulfonate can also be used. Ammonium lignin sulfonate is preferred. Mixtures of lignin sulfonate salts can also be used. The lignin sulfonate salt can be anhydrous or a solution in water. A solution of lignin sulfonate salt in water is preferred. The amount of lignin sulfonate salt in the solution can vary in the range of about 10 wt% to 95 wt% based on the weight of the solution. A 50 to 75 wt% of lignin sulfonate in water is preferred. Salts of lignin sulfonate are commercially available materials and can be purchased as solutions in water.

The method to produce a lignin-solids composition comprises the step of thermally treating a mixture of lignin and solids for a time and at a temperature sufficient to produce thermally treated lignin from said lignin and to allow said thermally treated lignin to adsorb to the surface of said solids. Preferably, the solids and lignin will be mixed prior to and during the thermal treatment. Typically, the temperature will range from about 120 to about 220°C, preferably about 130 to about 180 °C, more preferably about 140° about 170°C. Treatment time can range from about 15 minutes to about 6 hours. Treatment time from about 3 to about 5 hours may be preferred. Treatment time from 1 to 3 hours provides good results. During thermal treatment, the mixture is purged with an oxygen source, which may be oxygen, air or any other oxygen-containing source. Typically, the air or oxygen purge will be conducted at a rate of about 20 to about 150 sets/barrel, preferably about 60 to 100 scfs/barrel of lignin.

The product of the process is cooled to about 15 to 35°C preferably to room temperature (about 20° to 25°C) and washed with an aqueous solution comprising water to extract any non-adsorbed water-soluble products of the process. Product washing can be accomplished by contacting the product with about 2 to 25 times its weight of an aqueous solution comprising water.
Preferably contacting is done at least 2 times. The aqueous solution can further comprise alcohols such as methyl, ethyl, isopropyl alcohols. Contacted water can be separated from the washed product by suitable means such as, but not limited to, filtering, gravity setting, decanting, centrifuging or hydrocyclone separation. In a preferred washing method, the product from the process can be placed on a filter media and the aqueous solution comprising water can be introduced on top of the product and the water allowed to percolate through the product. Preferably, the product is washed until no water-soluble lignin or thermally formed water- soluble products are detected in the washings. Optionally, the washed product is dried in air or in an oven at about 80° to 100°C.

The solids for thermal treatment with lignin can be selected from a variety of materials including inorganic and organic solids. For example, inorganic solids may include fumed silica, sold under the trade name of Aerosil 130, bentonite clays, divided or delaminated bentonite clay gel, kaolinite clays, and mixtures thereof. The organic solids may include for example carbonaceous solids such as soot and coke fines or mixtures thereof. The solids if spherical are preferably in the size range of about 100 microns to 5 microns diameter. The solids, if non-spherical or spherical, preferably have a total surface area of about 40,000 square microns to 100 square microns. The preferred treat rate for the solids is 80 to 2 wt%, based on the weight of the lignin, more preferably, 50 to 20 wt%. The preferred materials are clays, specifically montmorillonite clays such as bentonite. Preferably, the clays will be a gel comprising delaminated or divided sheets of clay. The solid particles must also remain dispersed or undissolved in the lignin solution. It is preferred that the solid particles are hydrophilic solids. The amphiphilicity of the solids can be determined by water wettability methods known in the art.

The solids utilized herein may exhibit a tendency to clump or aggregate prior to thermal treatment. The phenomenon of aggregation is known in the art and its origin is attributed to primarily weak physical attraction forces. The size of the solids herein is the size of the individual isolated solid particle and not that of the aggregate. During the thermal treatment, the mixture of solids and lignin or lignin sulfonate are mixed at elevated temperatures. The shearing forces accompanying the mixing at elevated temperatures are sufficient to de-aggregate the solids. Regardless of whether or not the solids utilized herein aggregate, the composition produced from the process will exhibit amphiphilic properties. The solid particles may be added before, during or after the thermal treatment step. It is preferred to add the solids to the lignin sulfonate and then thermally treat the mixture. If the solids are added post thermal treatment the mixture is subjected to high shear mixing preferably in the range of 7000 to 12000 rpm of the mixing paddle.

If bentonite is used as the solid, it may be used in divided or delaminated form as a gel. When the gel is added to the oil and subject to the thermal treatment in the presence of an oxygen source, for example, air or oxygen, water is expelled from the reaction vessel as steam. The thermal treatment reaction should be carried out until at least 80% of the water present in the mixture is expelled, preferably until 95% of the water is expelled, and even more preferably until 99% of the water is expelled.

The amount of solids added to the lignin can vary in the range of about 80% to 2% based on the weight of the lignin. At the higher concentrations, the mixture of solids and lignin will be a high solids content slurry. When divided bentonite gel is used as the carrier for the bentonite solid, the amount of gel added to the lignin before thermal treatment can vary in the range of 5 to 95% of gel based on the weight of the lignin. The weight of bentonite clay solids in the gel can vary from 1 to 30% based on the weight of the water. Bentonite clay gel can easily be prepared by delamination or peptization methods known in the art. An Introduction to Clay Colloid Chemistry by H. van Olphen second Edition John Wiley & Sons provides a description of peptizing and delamination methods practiced in the art.

After the completion of the thermal treatment step, the product is washed with an aqueous solution comprising water and dried as disclosed earlier. The washed and dried product, has surface modified solids present in the range of 99.9 to 80 wt% based on the total weight of the composition, preferably in the range of 99.9 to 90 wt% and more preferably in the range of 99.9 to 95 wt%. The adsorbed thermally treated lignin is in the range of 0.1 to 20 wt% based on the total weight of the composition. The adsorbed lignin covers at least about 50% of the surface of the solids. Preferably about 75% of the surface of the solids and more preferably about 95% to 100% of the surface of the solids. Scanning electron microscopy techniques can be used to determine surface coverage.

While not wishing to be bound or limited to any mechanism of thermal treatment, applicant believes oxidation of the lignin or lignin sulfonate is one possible reaction. Thermal reaction products including oxidized products can adsorb on the dehydrated solids to provide the lignin-solids product of the instant invention. Accordingly, oxidation catalysts may be used to enhance the thermal reaction. The oxidation catalyst may be selected from catalysts containing iron, nickel, manganese, and mixtures thereof. The catalyst can be added to the thermal treatment as finely divided metal or oil soluble metal salts such as iron naphthenate and can be used to catalyze oxidation rates and effect selectivity in the oxidation products. Such oxidation promoting catalysts and the techniques of using such catalysts are well known in the art. Oxidation can be conducted at elevated pressures of about 30 to about 100 psi to further catalyze the reaction rate and achieve product selectivity.

The compositions of the current invention exhibit unique amphiphilic properties. For example, one measure of amphiphilicity is the contact angle the substrate makes with water. Contact angle measurements can be made by methods known to one of ordinary skill in the art of wettability modification. One method of measuring contact angle is the optical Goniometer method. Another method is the Washburn imbibition method. The measured contact angle between water and the solids of the instant invention is in the range of about 50° to 100°. A contact angle of about 0° to 15° is a water wetting or hydrophilic condition of a material. A contact angle of 160° to 180° is a water repelling or hydrophobic condition of the material. A contact angle in the range of about 50° to 120° is unique and indicative of intermediate wettability or a partially water wetting and partially water repelling condition. The compositions of the instant invention posses this intermediate wettability or amphiphilicity.

### EXAMPLES

The following examples are illustrative and are not meant to be limiting in any way.

### Example 1

A mixture of 74 grams of ammonium lignin sulfonate and 37 g of divided bentonite gel and with a bentonite solids concentration of 3.5 wt% in the gel was heated to a temperature of 160°C for 4 hours with an air purge of 80 scf/bbl/hour. The lignin sulonate was 50% water solution of ammonium lignin sulfonate salt. About 67 g of water was expelled from the reactor. After completion of reaction the product was tapped hot from the reactor. The reaction product was cooled to room temperature and washed with 100g water. Washing was done 6 times and the washed product air-dried. The washed product is the lignin-solids sulfonate composition.

A scanning electron microscopy (SEM) coupled Energy Dispersive Spectroscopy (EDS) technique was used to characterize the product. SEM-EDS techniques are known to one of ordinary skill in the art of electron microscopy. The SEM-EDS technique confirmed the presence of lignin sulfonate on the bentonite solids. A characteristic sulfur peak was observed in the EDS indicative of the presence sulfonate group. SEM-EDS was also used to determine surface coverage of the lignin on the bentonite surface. For the specimens examined 90 to 100% coverage was observed.

Contact angle was measured by the optical Goniometer method using a compacted pressed pellet of the product. Distilled water was used as the wetting medium and contact angle was measured at 25°C. Contact angle in the range of 70° to 100° was measured at various positions on the pellet.

## Claims

1. A lignin-solids composition comprising surface modified solids comprising: 99.9 to 80 wt% solids based on the total weight of said composition, and 0.1 to 20 wt% thermally treated lignin, wherein said thermally treated lignin is adsorbed on said solids.

2. The composition of claim 1 wherein said solids are selected from inorganic and organic solids selected from the group consisting of fumed silica, bentonite clays, divided or delaminated bentonite clay gel, kaolinite clays, coke fines, soot and mixtures thereof.

3. The composition of claim 1 wherein said solid is montmorillonite clay.

4. The composition of claim 3 wherein said montmorillonite clay is bentonite clay.

5. The composition of claim 1 wherein said lignin is lignin sulfonic acid salt of Group I and Group II elements of The Periodic Table of Elements and mixtures thereof.

6. The composition of claim 1 wherein said lignin is ammonium lignin sulfonate or mixtures of lignin sulfonate salts.

7. The composition of any of claim 1 to 6 wherein said solid is a hydrophilic solid.

8. The composition of claim 1 having a contact angle of about 50° to 120° wherein said contact angle is between said composition and water.

9. A method for preparing a lignin-solids composition comprising:
- thermally treating a mixture of lignin and solids in the presence of oxygen for 15 minutes to 6 hours and at a temperature in the range of 120° to 220°C to produce thermally treated lignin and to allow the thermally treated lignin to adsorb onto the surface of the solid wherein said adsorption achieves at least 50% coverage to result in a thermally treated lignin-solids product
- cooling said product to a temperature in the range of about 15°C to about 35°C to provide a cooled product and, thereafter,
- washing said cooled product with an aqueous solution comprising water to provide the lignin-solids composition.

10. The method of claim 9, wherein said thermal treatment is conducted in the presence of an oxidation catalyst.

11. The method of claim 9 or 10 wherein said oxidation catalyst is selected from a catalyst containing iron, manganese, nickel or mixtures thereof.

12. The method of any of claims 9 to 11, wherein said solids are present in said mixture in the range of about 80 to 20 wt% based on the weight of the lignin.

13. The method of any of claims 9 to 12 wherein the solids are added to the lignin as a gel or slurry.

14. The method of claim 13 wherein said gel comprises about 1 to about 10 wt% clay solids and about 90 to about 99 wt% water.

15. The method of claim 13 or 14 wherein said gel is montmorillonite clay gel.

16. The method of claim 15 wherein said montmorillonite clay gel is bentonite clay gel.
